# EUROPEAN PATENT SPECIFICATION

(11) **EP 1 169 807 B1**
(45) Date of publication and mention of the grant of the patent: **23.07.2014**
(21) Application number: 00910876.2
(22) Date of filing: 23.03.2000
(51) Int. Cl.: H04L 9/06

(54) **METHOD FOR ENCIPHERING A SERIES OF SYMBOLS APPLYING A FUNCTION AND A KEY**
VERFAHREN ZUR VERSCHLÜSSELUNG EINER FOLGE VON SYMBOLEN UNTER VERWENDUNG EINER FUNKTION UND EINES SCHLÜSSELS
PROCEDE DE CRYPTAGE D'UNE SERIE DE SYMBOLES PAR APPLICATION D'UNE FONCTION ET D'UNE CLE

(30) Priority: 01.04.1999 NL 1011719
(43) Date of publication of application: 09.01.2002
(73) Proprietor: Koninklijke KPN N.V., 2516 CK The Hague (NL)
(72) Inventor: MULLER, Frank, NL-2623 NJ Delft (NL); PRINS, Sharon, Christie, Lesley, NL-9711 KN Groningen (NL); ROELOFSEN, Gerrit, NL-2331 AH Leiden (NL)
(74) Representative: Wuyts, Koenraad Maria
(86) International application number: PCT/EP2000/002617
(87) International publication number: WO 2000/060807

(56) References cited:
- EP-A- 0 267 647
- EP-A- 0 801 477
- US-A- 4 157 454
- US-A- 4 979 832
- SCHUETT D ET AL: "CRYPTOGRAPHIC PERMUTATIONS BASED ON BOOT DECOMPOSITIONS OF WALSH MATRICES" COMPUTER AIDED SYSTEMS THEORY. EUROCAST. SELECTION OF PAPERS FROM THE INTERNATIONAL WORKSHOP ON COMPUTER AIDED SYSTEMS THEORY, 1 February 1997 (1997-02-01), pages 580-590, XP002070120 BERLIN (DE)
- MIYAGUCHI S: "SECRET KEY CIPHERS THAT CHANGE THE ENCIPHERMENT ALGORITHM UNDER THECONTROL OF THE KEY" NTT REVIEW, vol. 6, no. 4, 1 July 1994 (1994-07-01), pages 85-90, XP000460342 TOKYO (JP)

## Description

The invention relates to a method according to the preamble of claim 1.

A method of said type is disclosed in EP-A-0399587. With the known method, the function ("algorithm") applied for enciphering consists of a non-linear function formed by a substitution box ("S box") generated as a function of the key. The document provides no further description of the way in which the substitution box is generated. For obtaining good statistical properties of the output of the substitution box with respect to variable import, a string of characters obtained by applying the substitution box are combined with just as long a string of statistically well-distributed characters. The string of characters obtained in this connection may be used for enciphering a string of input characters to be enciphered in an enciphered string of output characters. By applying a key-dependent substitution box instead of a permanent substitution box, the enciphering function is reinforced.

An objection to the known method is that, when there is substantially always used the same key, said reinforcement of the enciphering function in practice is appreciably annihilated. Such may occur, e.g., upon authentication when using a chip card, such as a calling card and a GSM card.

The object of the invention is to exclude the drawbacks of the known method. To this end, the invention provides a method as described in claim 1.

The sender of the enciphered string of output characters and the receiver of said series must both dispose of the same key and the string of input characters used for enciphering, at any rate the portion of the latter series used for modifying the function. As a result, the method is particularly suited for authentication, the receiver of an enciphered string of characters being capable of checking whether a sender having an identity suggested to the receiver has utilised a corresponding key, and in the event of a positive outcome of said check, the identity of the sender is ensured to the receiver.

The string of characters used for modifying the function are particularly variable and are, e.g., a challenge number generated per session, any (different) number, or a variable attribute of the sender, such as a balance kept up to date on a chip card.

If the non-linear function used for enciphering were an invertible function, the receiver of the enciphered string of characters may carry out said check using the same function, the same key and the received string of characters as an input for the function. The result must be equal to the string of input characters used for enciphering. Since the receiver may also carry out the check by executing the same operations as the ones carried out by the sender, the series received by the receiver having to be equal to the series generated by the receiver. In such case, it is not required that the function be an invertible function, as a result of which, in the event of the complexity remaining constant, there may be realised a stronger enciphering function which is more resistant against attacks.

The function applied to enciphering preferably is a non-linear function which may be formed by way of a substitution box or a cryptographic function, such as a function in which, depending on the input and the key, specific operations are carried out or not.

It is noted that EP0801477 discloses an encryption method in which an "internal state" is controlling an encryption function which, in each encryption round, modifies the encryption function. According to the present invention, the encryption function is modified only once, in an initial step, while always, after the initial modification, the same encryption function is used in every new encryption round. Contrary to that in the known method the encryption function is modified in every encryption round. Further, in the known method the encryption function is not modified on the basis of the input text. According to the present invetnion the input text forms an essential parameter in modifying the encryption function.

Next, it is noted that US4979832 discloses an enciphering method in which a pseudo-random input string is added to an encryption function. The pseudo-random string used in the encryption function also has to be available in the decryption process. In the known method the encryption function is dynamically (continuously) modified during the encryption processes. This is essential in the method according otherwise the system would be highly insecure. According to the present invention, however, there is only an initial modification of the encryption function, prior to the encryption process itself. Consequently, during the subsequent encryption process the encryption function is not changed any more. The known method is aimed at encryption/decryption. The method according to the invention is specifically designed for authentication and even can in practice not be used for encryption/decryption.

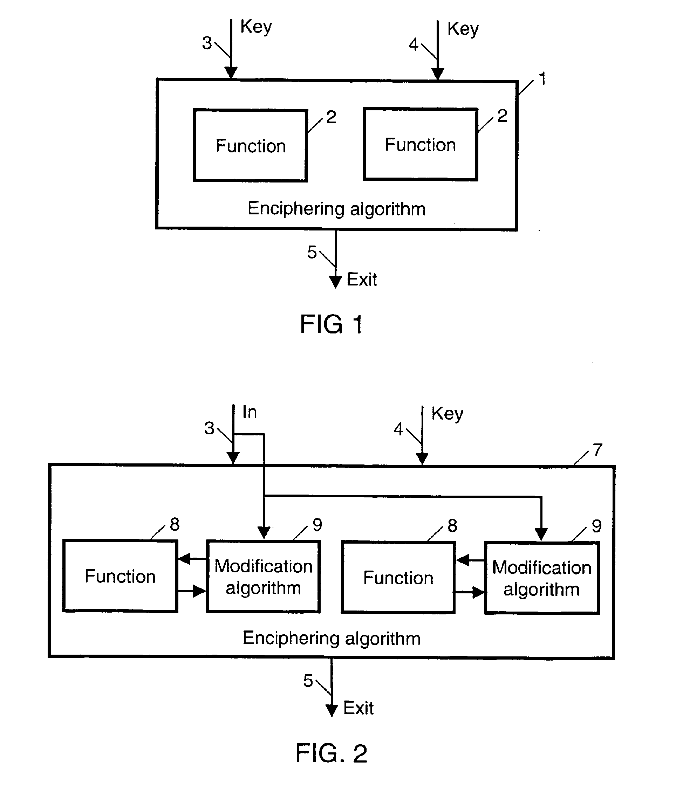

Further properties and advantages of the invention will become clear from the explanation following below of embodiments of the invention in conjunction with the enclosed drawings, in which:
FIG. 1 shows a diagram of a known enciphering function;
FIG. 2 shows a diagram of a first embodiment of the invention;
FIG. 3 shows a flow diagram for the operation of the embodiment according to FIG. 2; and
FIG. 4 shows a different embodiment of the invention.
By way of a block 1, FIG. 1 presents a known enciphering function (or encryption function). The enciphering function utilises one or more functions 2, also presented by blocks. Assuming a string of input characters IN 3 to be enciphered, the enciphering function using a secret key 4 determines an enciphered string of output characters EXIT 5. The known enciphering function DES [= Data Encryption Standard] operates according to said principle, eight non-linear functions being used which are formed by substitution boxes ("S boxes"). The invention is not limited, however, to the DES function; neither is it limited to using non-linear functions and substitution boxes for the functions.

FIG. 2 shows a diagram of an enciphering function 7 based on the enciphering function of FIG. 1 according to the invention. The functions are indicated by reference numeral 8. The functions 8 may be modified by applying an associated reference function 9 based on the string of input characters IN 3 or part thereof. The modification functions 9 need not be equal.

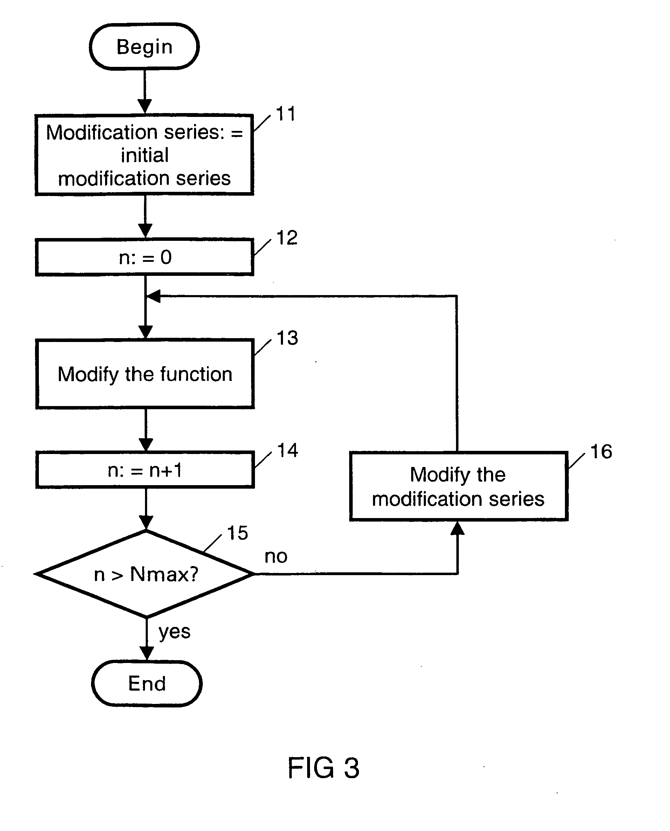

Below, the operation of the enciphering function of FIG. 2 will be explained with reference to the flow diagram of FIG. 3.

A modification function 9 modifies the function 8 based on a string of modification characters initially derived from the string of input characters IN 3 (block 11). Modifying the function 8 takes place in several steps, namely, the steps n-0 to n-Nmax inclusive, Nmax being permitted to be permanent or also depending on, e.g., the series IN 3. That is why, at the start of the modification of the function 8, a step counter is reset (block 12). Subsequently, the function 8 is modified, based on the value of n and the modification series (block 13). Then the number of steps counted is incremented by 1 (block 14) Subsequently, it is checked whether the function 8 has already been modified the maximum number of times (block 15). When this condition is met, the modification of the function 8

is terminated; otherwise the string of modification characters are modified (step 16) and the function 8 is modified once again based on the new value of n and the modified string of modification characters (step 13). In Box I following below, an example is given for the operation of the enciphering function 7 shown in FIG. 2.

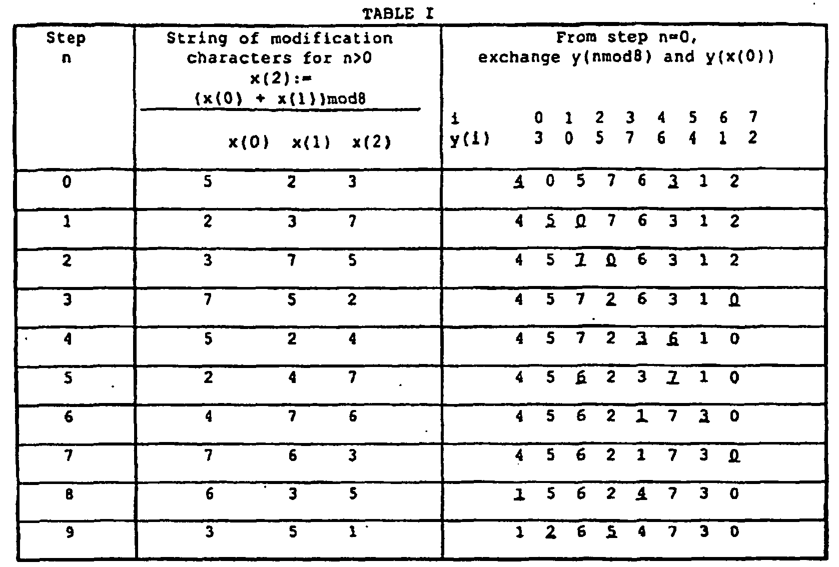

It is assumed that the set of characters comprises eight characters, shown in the Table with the numerals 0 to 7 inclusive. It is further assumed that the function 8 is formed by a substitution box. Said box may be realised by a rewritable memory having eight memory locations containing addresses or sequential numbers 1=0...7. The memory locations each comprise one of the characters, each character figuring only once in the memory locations. In Table I, the content of a memory location having address or sequential number i is indicated by y(i). Initially, the memory locations for i=0...7 contain the characters 3, 0, 5, 7, 6, 4, 1, 2, respectively. Said string of characters form an initial substitution box. A character of a string of characters to be enciphered is considered to be address or sequential number i, and is replaced by the character in the memory location having said address. According to the initial substitution box of Table I, e.g., 0 is therefore replaced by 3, 1 by 0, 2 by 5, ..., 7 by 2.

Before a string of characters to be enciphered are actually enciphered, according to the invention the initial substitution box is modified first. According to the example of Table I, modification takes place in ten steps (step n=0 to n=Nmax inclusive). The modification takes place depending on the characters of the string of characters to be enciphered, at any rate of several characters thereof. In Table I, the characters to be enciphered which are used for the modification of the substitution box are the characters 5, 2 and 3 indicated at step n=0. Said characters are allotted to variables x(0), x(1) and x(2), respectively.

During the first step with n=0, the character y(n), i.e., the character 3 of memory location 0, is exchanged with the character y(x(0)), namely, character 4 of location x(0)=5. In Table I, for clarity's sake, the exchanged characters of the substitution box of eight characters are underlined for each of the ten steps n=0, ...9.

Subsequently, there is calculated an auxiliary variable h, which is equal to:
h=(x(0)+x(1)) modulo (the number of possible characters),
or in the example
h=x(0)+x(1)) modulo 8.

Subsequently, the characters of the string of modification characters x(0), x(1) and x(2) are replaced as follows (":=" means "becomes", i.e., an allotment).
x(0):=x(1),
x(1):=x(2), and
x(2):=h.

For each step, modifying characters based on the step number and the characters of the string of modification characters are repeated a suitable number of times, in the example of Table I Nmax+1=10 times. At the end of said modification function, the initial substitution box:
3, 0, 5, 7, 6, 4, 1, 2
has been replaced by a final substitution box:
1, 2, 6, 5, 4, 7, 3, 0.

Subsequently, the characters of an input series to be enciphered may, according to the order of the characters in the eventual substitution box, be replaced for providing an output string of enciphered characters. As a result, in the example the string of input characters 5, 2, 3 are replaced by 7, 6, 5, respectively. Said string of output characters are used for possible further steps of the enciphering function.

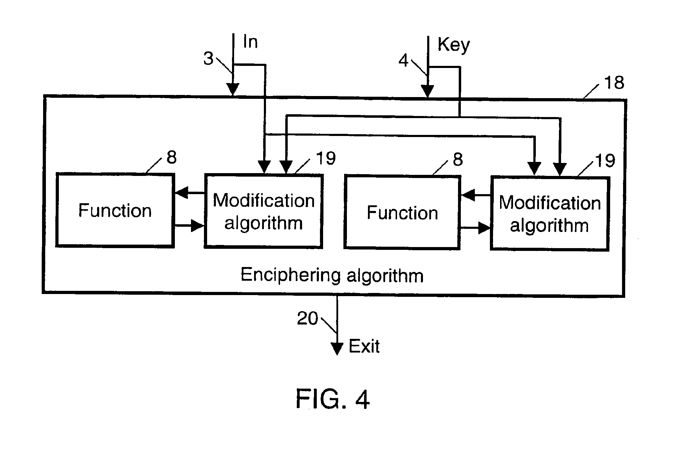

FIG. 4 shows the diagram of an enciphering function 18 which differs from the enciphering function 5 of FIG. 2 in that the modification function 9 is replaced by a modification function 19. Just as the modification function 9, the modification function 19 depends on a number of characters IN 3 to be enciphered, but in addition on a number of characters of the key 4.

Table II offers an example of the operation of the modification function 19.

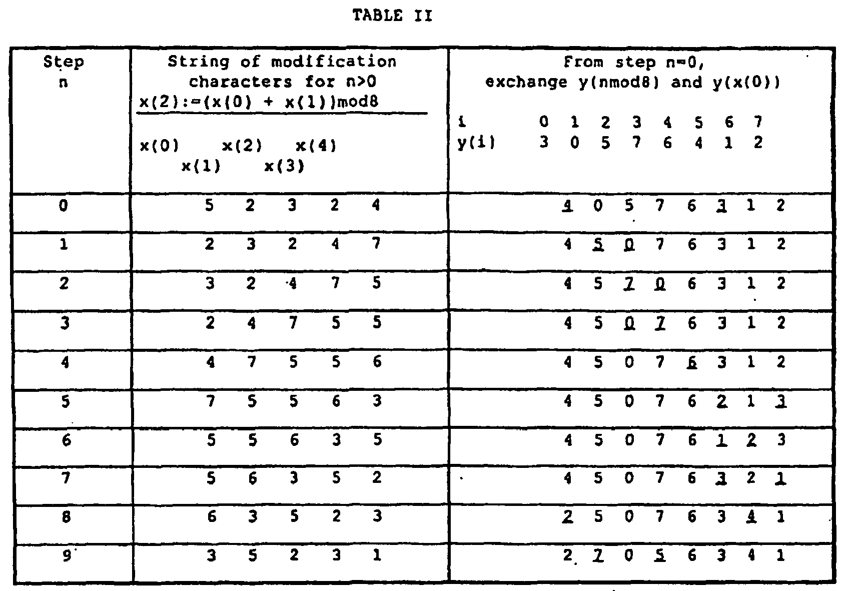

Table II differs from Table I only in that the string of modification characters x(0), x(1), x(2) are completed by x(3), x(4). The characters x(3) and x(4) are derived from the key 4. In the example of Table II, the initial string of modification characters is 5, 2, 3, 2, 4. According to Table II, the eventual substitution box is:
2, 7, 0, 5, 6, 3, 4, 1.

The string of input characters IN 3 having the characters 5, 2, 3 is replaced, according to said eventual substitution box, by the enciphered string of output characters EXIT 20 having the characters 3, 0, 5.

The characters of the initial substitution box may be sorted at random for as long as both the sender of a string of enciphered characters UIT 5 and the receiver of the string of enciphered characters use the same initial substitution box. If it is possible to always meet said condition, the enciphering function may be reinforced by using, as an initial substitution box, a substitution box used during a preceding enciphering process, e.g., the most recently used eventual substitution box. If there is a danger that said condition is not always met, it may be provided that the receiver of the string of enciphered characters 5 recalls several of such preceding substitution boxes and uses an older one thereof if deciphering the series received leads to a negative check result.

Since, both during enciphering a string of characters and during deciphering thereof, the keys used must be equal and knowledge must be available on the string of enciphered characters IN 3, the receiver of the enciphered series may carry out exactly the same operation, i.e., enciphering, as the receiver has carried out, and compare the results to one another. In this event, a non-invertible function may be used for the function which, in the event of constant complexity, makes a stronger enciphering function possible.

The modification functions explained in conjunction with Tables I and II serve only as an example. For modifying the string of modification characters there may be applied, e.g., for each step, more than two and/or a different number of modulo additions, and the characters of the modification series may be rearranged in other ways instead of by way of simple shifting.

## Claims

1. Method for authentication of a string of input characters (3) by means of an enciphering function (2, 8) enabled for enciphering said string of input characters under control of a string of key characters (4) in a system for transmitting an enciphered series of output characters from a sender to a receiver, comprising the steps of:
• modifying, by application of a modification function, under control of a string of modification characters, said enciphering function;
• enciphering, by application of an enciphering function, under control of said string of key characters (4), said string of input characters,
**characterized in that**
• said modification function (9, 19) is applied initially, prior to said application of the enciphering function and
• said initially applied modification function modifies the enciphering function (8) under control of modification characters which are derived from said string of input characters (3).

2. Method according to claim 1, **characterised in that** said modification characters are also derived from said string of key characters (4).

3. Method according to claim 1 or 2, **characterised in that** the modification function (9, 19) comprises the replacement of a character of the string of modification characters, by a replacement character obtained by an addition of two or more characters of the string of modification characters modulo the number of possible different characters.

4. Method according to any preceding claim, **characterised in that** the modification function (9, 19) comprises the modification of sequence numbers of two or more of the characters of the string of modification characters.

5. Method according to any preceding claim, **characterised in that**, for the modification of the function, there is used as an initial function the function which was used earlier for determining an earlier string of output characters (5, 20).

6. Method according to any preceding claim, **characterised in that** the function is a substitution function.

7. Method according to any of the claims 1 to 5 inclusive, **characterised in that** the function is a non-invertible function.

8. Method according to any of the preceding claims, **characterised in that** the function comprises a substitution box containing replacement characters for the characters of the string of input characters, and the modification function containing the exchange, depending on the string of modification characters, of two or more characters of the substitution box.

## Patentansprüche

1. Verfahren zur Authentifizierung einer Eingabezeichenkette (3) mit Hilfe einer Verschlüsselungsfunktion (2, 8), die zum Verschlüsseln der Eingabezeichenkette unter Steuerung einer Schlüsselzeichenkette (4) aktiviert ist, in einem System zum Senden einer verschlüsselten Folge von Ausgabezeichen von einem Sender zu einem Empfänger, wobei das Verfahren die folgenden Schritte umfasst:
• Modifizieren der Verschlüsslungsfunktion durch Anwendung einer Modifikationsfunktion unter Steuerung einer Modifikationszeichenkette;
• Verschlüsseln der Eingabezeichenkette durch Anwenden einer Verschlüsselungsfunktion unter Steuerung der Schlüsselzeichenkette (4),
**dadurch gekennzeichnet, dass**
• die Modifikationsfunktion (9, 19) anfangs angewandt wird, vor der Anwendung der Verschlüsselungsfunktion und
• die anfangs angewandte Modifikationsfunktion die Verschlüsselungsfunktion (8) unter Steuerung von aus der Eingabezeichenkette (3) abgeleiteten Modifikationszeichen modifiziert.

2. Verfahren nach Anspruch 1, **dadurch gekennzeichnet, dass** die Modifikationszeichen auch aus der Schlüsselzeichenkette (4) abgeleitet werden.

3. Verfahren nach Anspruch 1 oder 2, **dadurch gekennzeichnet, dass** die Modifikationsfunktion (9, 19) das Ersetzen von Zeichen der Modifikationszeichenkette durch ein Ersetzungszeichen, das durch eine Addition von zwei oder mehreren Zeichen der Modifikationszeichenkette modulo der Anzahl möglicher verschiedener Zeichen erhalten wird, umfasst.

4. Verfahren nach einem der vorhergehenden Ansprüche, **dadurch gekennzeichnet, dass** die Modifikationsfunktion (9, 19) die Modifikation von Folgenummern von zwei oder mehreren der Zeichen der Modifikationszeichenkette umfasst.

5. Verfahren nach einem der vorhergehenden Ansprüche, **dadurch gekennzeichnet, dass** für die Modifikation der Funktion als eine Anfangsfunktion die Funktion verwendet wird, die vorher zum Bestimmen einer früheren Ausgabezeichenkette (5, 20) verwendet wurde.

6. Verfahren nach einem der vorhergehenden Ansprüche, **dadurch gekennzeichnet, dass** die Funktion eine Substitutionsfunktion ist.

7. Verfahren nach einem der Ansprüche 1 bis einschließlich 5, **dadurch gekennzeichnet, dass** die Funktion eine nicht invertierbare Funktion ist.

8. Verfahren nach einem der vorhergehenden Ansprüche, **dadurch gekennzeichnet, dass** die Funktion eine Substitutionsbox umfasst, die Ersetzungszeichen für die Zeichen der Eingabezeichenkette enthält und die Modifikationsfunktion den Austausch, abhängig von der Modifikationszeichenkette, von zwei oder mehr Zeichen der Substitutionsbox enthält.

## Revendications

1. Procédé d'identification d'une chaîne de caractères d'entrée (3) au moyen d'une fonction de chiffrage (2, 8) activée pour chiffrer ladite chaîne de caractères d'entrée sous la commande d'une chaîne de caractères de clé (4) dans un système de transmission d'une série chiffrée de caractères de sortie d'un expéditeur à un destinataire, comprenant les étapes consistant à :
• modifier, par l'application d'une fonction de modification, sous la commande d'une chaîne de caractères de modification, de ladite fonction de chiffrage ;
• chiffrer, par l'application de la fonction de chiffrage, sous la commande de ladite chaîne de caractères de clé (4), ladite chaîne de caractères d'entrée,
**CARACTÉRISE EN CE QUE**
• ladite fonction de modification (9, 19) est appliquée initialement, avant ladite application de la fonction de chiffrage et
• ladite fonction de modification appliquée initialement modifie la fonction de chiffrage (8) sous la commande de caractères de modification qui sont dérivés de ladite chaîne de caractères d'entrée (3).

2. Procédé selon la revendication 1, **caractérisé en ce que** lesdits caractères de modification sont également dérivés de ladite chaîne de caractères de clé (4).

3. Procédé selon la revendication 1 ou 2, **caractérisé en ce que** la fonction de modification (9, 19) comprend le remplacement d'un caractère de la chaîne de caractères de modification, par un caractère de remplacement obtenu par une addition de deux ou plusieurs caractères de la chaîne de caractères de modification modulo le nombre de différents caractères possibles.

4. Procédé selon l'une quelconque des revendications précédentes, **caractérisé en ce que** la fonction de modification (9, 19) comprend la modification de numéros de séquence de deux ou plusieurs des caractères de la chaîne de caractères de modification.

5. Procédé selon l'une quelconque des revendications précédentes, **caractérisé en ce que**, pour la modification de la fonction, est utilisée comme fonction initiale la fonction qui a été utilisée antérieurement pour déterminer une chaîne antérieure de caractères de sortie (5, 20).

6. Procédé selon l'une quelconque des revendications précédentes, **caractérisé en ce que** la fonction est une fonction de substitution.

7. Procédé selon l'une quelconque des revendications 1 à 5 incluse, **caractérisé en ce que** la fonction est une fonction non inversable.

8. Procédé selon l'une quelconque des revendications précédentes, **caractérisé en ce que** la fonction comprend une case de substitution contenant des caractères de remplacement des caractères de la chaîne de caractères d'entrée, et la fonction de modification contient l'échange, en fonction de la chaîne de caractères de modification, de deux ou plusieurs caractères de la case de substitution.
